# EUROPÄISCHE PATENTSCHRIFT

(11) **EP 0 665 062 B1**
(45) Veröffentlichungstag und Bekanntmachung des Hinweises auf die Patenterteilung: **04.12.1996**
(21) Anmeldenummer: 95810053.9
(22) Anmeldetag: 30.01.1995
(51) Int. Cl.: B05C 11/10, E01C 23/24, F16K 7/18, B05C 5/00

(54) **Einrichtung an einem Fahrzeug zur Strassenmarkierung mittels Farbstropfen**
Device for road marking vehicle using paint drops
Dispositif pour véhicule de marquage de routes au moyen de gouttes de peinture

(30) Priorität: 31.01.1994 CH 274/94
(43) Veröffentlichungstag der Anmeldung: 02.08.1995
(73) Patentinhaber: ROBERIT AG, CH-5200 Windisch (CH)
(72) Erfinder: Ehrismann, Alfred, CH-5200 Windisch (CH)
(74) Vertreter: Legland, Brynjulv

(56) Entgegenhaltungen:
- EP-A- 0 179 406
- EP-A- 0 632 166
- CH-A- 683 275
- DE-A- 3 728 250
- FR-A- 2 685 426
- PATENT ABSTRACTS OF JAPAN vol. 16 no. 395 (M-1299) ,21.August 1992 & JP-A-04 131414 (SHINGOU KIZAI KK) 6.Mai 1992

## Beschreibung

Die Erfindung betrifft eine Einrichtung gemäss dem Oberbegriff des ersten Patentanspruches.

Bei Strassenmarkierungen unterscheidet man zwischen einer einfach aufgelegten Farbe, die z.B. zur Markierung von Parkflächen dient und keine eigentliche Warnfunktion hat, und sogenannten strukturierten Farben, die an schnell befahrenen Strassen benutzt werden und dazu dienen, den Autofahrern die Fahrtrichtungen usw. zu signalisieren, die bei Nacht deutlich sichtbar sein müssen.

Die strukturierten Farben enthalten sogenannte Perlen, die das Scheinwerferlicht eines ankommenden Fahrzeuges reflektieren und somit die Sichtbarkeit der Markierung bei Nacht und Regen gewährleisten.

Zum Auftragen einer strukturierten Farbe wird ein an einem Fahrzeug montierter oder von ihm gezogener Farbbehälter benutzt, der unten einen schmalen Spalt aufweist, aus dem die Farbe ausfliessen kann. Damit sich Tropfen zur Herstellung der strukturierten Markierung bilden, wird die ausfliessende Farbe durch rotierende walzenartige Körper und/oder mittels Druckluft in Tropfen umgewandelt.

Eine walzenartige Ausführung mit einer Rundbürste ist in DE-A-37 28 250 (Grude) beschrieben, welche die Farbe in Tropfen umwandelt. Diese Ausführung ist mit dem Nachteil behaftet, dass ein Teil der Farbe die einzelnen Borsten miteinander verklebt, so dass die Rundbürste nach einem relativ kurzen Einsatz erstarrt, so dass die Bürstenwirkung nicht mehr die Umwandlung der Farbe in Tropfen bewirkt und somit ersetzt werden muss, da eine Reinigung fast nicht möglich ist. Das Auswechseln der Walzen ist zeitraubend und kostspielig und verursacht häufige Betriebsunterbrüche.

In der EP-A-0 422 346 (Wyssbrod) ist eine weitere Ausführung dieser Walzenart beschrieben, bei der entweder eine Walze mit glatter Mantelfläche oder eine solche mit Vorsprüngen benutzt wird. Die Ausführung mit glatter Oberfläche besitzt den Nachteil, dass sie nur in geringem Masse Tropfen erzeugt, während die mit Vorsprüngen versehene Ausführung zur Bildung von Schichten zwischen den Vorsprüngen neigt, so dass diese nur geringfügig zur Tropfenbildung beitragen, und die Walze nach relativ kurzer Dauer ausgewechselt oder gereinigt werden muss.

CH-A-683 275 (Roberit) nachveröffentlicht beschreibt einen Schliessmechanismus für den Ausflussschlitz für die Farbe, der aus einem einfachen Schieber besteht, der zwischen zwei Führungen gleitet. Derartige Schieber neigen zum Verkleben und zur Anhäufung von Farbe, die nach einer gewissen Zeit eintrocknet und somit häufiges Reinigen erfordert.

Bei einer weiteren Ausführung wird der Spalt von einer drehbaren Klappe geschlossen oder sie ist auf die Ausflussmenge eingestellt. Diese Klappe wird leicht mit dem Kanal verklebt, so dass sie sich nur schwer öffnet und - wegen der unregelmässigen Ansammlung von Farbresten am Kanalausgang - undicht schliesst.

FR-A-2 685 426 (Valeo) beschreibt eine Einrichtung mit einem Verschluss für einen Fluiddurchlass mit einem Rollband, das an einem Ende an einer Platte und am anderen Ende an einer Walze befestigt ist. Durch eine Drehbewegung der Walze ist der Spalt zwischen der Platte und dem Rollband einstellbar.

Die Walze ist an beiden Enden mit Zahnrädern versehen, die jeweils in Zahnstangen eingreifen. Der Verschluss wird von einem Kabelzug oder dgl. betätigt und ist für die Lüftung/ Heizung im Automobilbau vorgesehen, wobei das Rollband vorzugsweise aus Kunststoff besteht und somit nicht zur Abwehr von Farbe geeignet ist.

Aufgabe der Erfindung ist die Schaffung einer Einrichtung an einem Fahrzeug zur Strassenmarkierung mittels Farbtropfen, welche die Nachteile der herkömmlichen Ausführungen nicht aufweist.

Die zu schaffende Einrichtung soll dabei gegenüber herkömmlichen Ausführungen
- die Tropfenbildung erleichtern
- den Abschlussmechanismus für den Spalt verbessern,
- Farbkrusten am Farbauslass verhindern, und
- die Serviceintervalle verlängern.

Diese Aufgabe ist erfindungsgemäss durch die Merkmale im Kennzeichnungsteil des ersten Anspruches gelöst.

Zweckmäßige Weiterbildungen der Erfindung sind in den abhängigen Ansprüchen beschrieben.

Das Rollband besteht aus einer Matte bezw. Silikonmatte, damit etwaige Krusten durch die Bewegung des Rollbandes sofort abbrechen. Die Verwendung eines Kolben-/Zylinderaggregates erleichtert die Fernbedienung der Matte und eine genaue Einstellung des Spaltes.

Mittels eines Spannkörpers ist es möglich, eine Schwenkbewegung zum Spalt hin zu erzeugen.

Auf der vom Leitblech abgewandten Seite der Turbine kann eine Abschirmung vorgesehen werden, die aus zwei gebogenen Blechen besteht, von welchen das eine schnell austauschbar ist. Diese Bleche verhindern, dass etwaige Farbe von der Turbine weggeschleudert wird. Diese Bleche sind vorzugsweise im Unterboden des Vorratsbehälter in einer Rinne angeordnet und mittels einer Klemme befestigt.

Nachstehend werden Ausführungsbeispiele der erfindungsgemässen Einrichtung anhand der Zeichnung näher erläutert. Es zeigen:
- Fig. 1: einen Vertikalschnitt durch die Einrichtung in der Fahrtrichtung mit offenem Farbschlitz,
- Fig. 2: wie Fig. 1, jedoch mit geschlossenem Farbschlitz,
- Fig. 3: eine Ansicht in der Richtung III in Fig. 2, und
- Fig. 4: eine Ansicht einer Befestigungsvorrichtung in der Richtung der Drehachse der Walze.

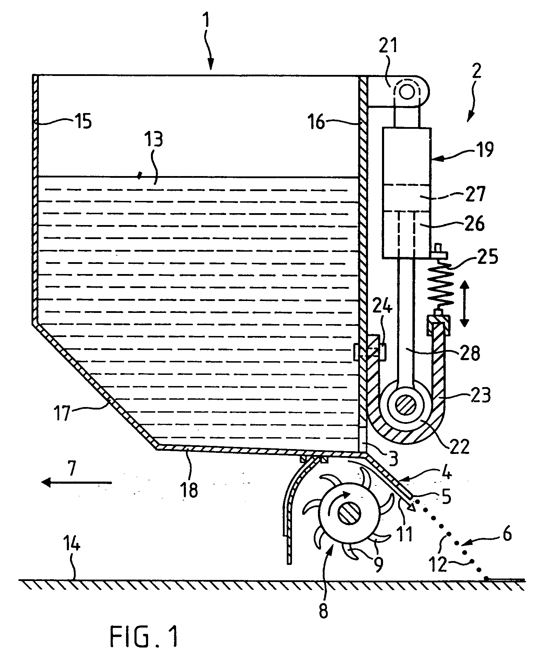

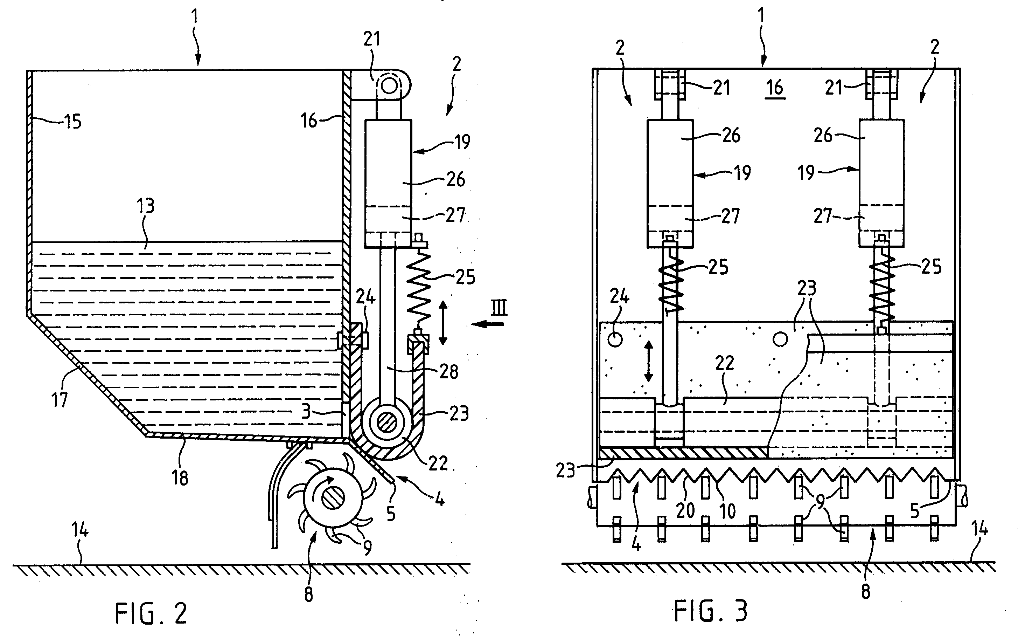

Fig. 1 und 2 zeigen einen Vorratsbehälter 1 mit zwei vertikalen Wänden 15 und 16 sowie einer unteren Schrägwand 17 und einer unteren Bodenfläche 18, wobei die Wand 15 etwa auf halber Höhe in die Schrägwand 17 übergeht. Ausserhalb der Wand 16 befindet sich eine Schiebervorrichtung 2, mit der es möglich ist, den Ausfluss der im Vorratsbehälter 1 befindlichen Farbmenge 13 pro Zeiteinheit einzustellen. Wenn die Schiebervorrichtung 2 nach unten oder nach oben verschoben wird, kann die Farbmenge 13 bzw. die Strömungsgeschwindigkeit dem Bedarf angepasst werden, wobei die Viskosität der Farbmenge 13 zu berücksichtigen ist.

Am unteren Ende der Schiebervorrichtung 2 befindet sich ein Spalt 3, wobei die Bodenfläche 18 in ein Leitblech 4 mit einer Kante 5 übergeht. Diese Kante 5 ist sägezahnförmig und/oder geriffelt ausgebildet, damit die laminare Strömumg der Farbmasse gebrochen wird und sich in eine Turbulenz verwandelt, so dass mehrere Farb-Teilströme 6 entstehen, wenn sich das Fahrzeug in der Richtung des Pfeiles 7 bewegt. Die von einer Turbinenwalze 8 erzeugte Turbulenz bewirkt, dass sich die Teilströme 6 infolge von Luftstrahlen 11 in Tropfen 12 umwandeln. Die von der Turbinenwalze 8 auf die Farbe ausgeübte Wirkung kann von der Art der Farbe sowie von der Geschwindigkeit des Fahrzeuges abhängen, an dem die Einrichtung montiert ist. Die Luftströmung ist gegen die untere Seite des schräg nach unten gerichteten Leitbleches 4 gerichtet und erzeugt an der unteren Kante 5 die zur Tropfenbildung erforderliche Turbulenz.

Die von der Kante 5 zwischen den Spitzen 10 abfallenden Tropfen 12 bleiben als Kleckse auf der Strassenoberfläche 14 liegen und haben eine strukturierte, profilierte oder erhöhte Form, wodurch sie eine verbesserte Reflektion der auf sie auffallenden Lichtstrahlen von Scheinwerfern und somit eine Verbesserung der Nachtsichtbarkeit der Markierung bewirken.

Der Abstand der Turbinenwalze 8 von der Kante 5 und die Form der Schaufel 9 werden so gewählt, dass die Turbulenz möglichst günstig für die Tropfenbildung ausfällt. Es wird darauf hingewiesen, dass dieser Abstand auch von der Fliessfähigkeit der Farbmasse abhängt, so dass es für unterschiedliche Arten von Farbmengen zweckmässig ist, geometrisch unterschiedlich ausgeführte Vorratshehälter 1 einzusetzen. Es besteht ferner bei einer bestimmten Ausführung die Möglichkeit, den Abstand der Kante 5 zur Turbinenwalze 8 durch eine Verschiebung derselben vor jedem Einsatz mit unterschiedlicher Farbkonsistenz einzustellen.

Die Luftströmung längs des Leitbleches 4 erzeugt eine beschleunigte Fallgeschwindigkeit der Tropfen 12 gegen die Fahrbahn, so dass die Tropfen 12 nicht wegfliegen oder sich nicht genügend fest mit der Strassenoberfläche verbinden. Dabei fallen die Tropfen 12, die in den Einschnitten 20 des zähneförmigen Leitbleches 4 entstehen, auch schräg zur Fahrtrichtung des Fahrzeuges auf die Strassenoberfläche.

Die Tropfengrösse wird hauptsächlich von der Grösse und der Form der Einschnitte 20, sowie von dem von der Turbinenwalze 8 erzeugten Druck und von der Neigung des Leitbleches 4 bestimmt. Durch eine Änderung einer dieser Grössen können Form und Grösse der Tropfen geändert werden, wenn von einer Farbmasse mit einer bestimmten Zähflüssigkeit ausgegangen wird.

Die Turbinenwalze 8 erstreckt sich über die Gesamtbreite des Vorratbehälters 1 und hat in der Achsrichtung mehrere Schaufeln 9 nebeneinander. Die Schaufeln 9 können je nach der Anwendung unterschiedliche Formen aufweisen, müssen aber derart ausgebildet sein, dass sie bei der Drehbewegung keine Farbe aufnehmen. Deshalb hat sich eine Form ausgebildet, die auf die Drehrichtung bezogen an umgekehrte Peltonturbinenschaufeln erinnert.

Die Schiebervorrichtung 2 (Fig. 1) besteht aus einem Kolben-/Zylinderaggregat 19, das an der Wand 16 an einer oberen Stelle 21 befestigt ist und zuunterst eine Rolle 22 aufweist, die auf eine Silikonmatte 23 abgestützt ist, die einerseits an einer unteren Stelle 24 der Wandung 16 und andererseits über eine Feder 25 mit dem Zylinder 26 des Aggregates 19 verbunden ist. Der in Fig. 1 offene Spalt 3 wird durch Bewegung des Kolbens 27 und der Rolle 22 nach unten durch die Silikonmatte 23 geschlossen, wie dies in Fig. 2 gezeigt ist. Die Verwendung der Silikonmatte 23 hat den Vorteil, dass angesammelte und erstarrte Farbe sich löst, was nicht bei einem Schieber aus Metall oder Kunststoff der Fall ist.

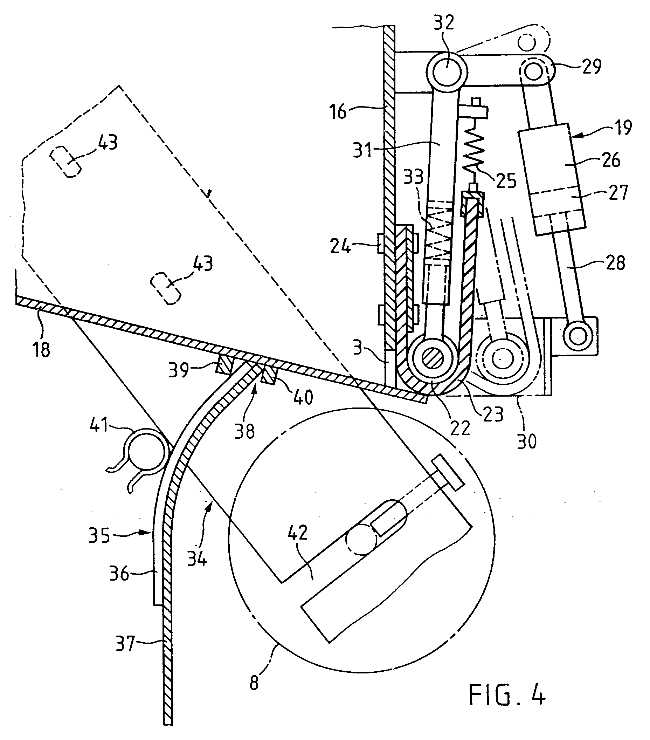

Fig. 4 zeigt schliesslich u.a. eine Variante der Schliessvorrichtung, bei der die Hydraulik auf einen Hebelarm 29 einwirkt, der dazu führt, dass die Rolle 22 auf einer Bahn 30 gleitet und dabei den Spalt 3 öffnet, indem die Silikonmatte 23 vom Spalt 3 wegbewegt wird. Dabei wird ein Kolben-/Zylinderaggregat 19 derjenigen Art verwendet, welches in Fig. 1 und 2 gezeigt ist. Beim Verschiebevorgang schwenkt ein Spannkörper 31 um einen Drehpunkt 32, wobei eine Feder 33 die Rolle 22 gegen die Silikonmatte 23 und diese gegen die Bahn 30 drückt.

Ferner zeigt Fig. 4 eine Befestigungsleiste bzw. einen Träger 34 für die Turbinenwalze 8 und einen Schirm 35, der aus zwei gebogenen Blechen 36 und 37 besteht, die leicht voneinander lösbar sind. Der Schirm 35 wird oben in einer Rinne 38 positioniert, die von zwei Vorsprüngen 39 und 40 begrenzt wird, und sind an einer Klemme 41 schnell lösbar befestigt.

Zum Auswechseln der Walze 8 ist ein Schlitz 42 im Träger 34 zum Einschieben und zur Befestigung mittels einer Schraube 43 vorgesehen. Der Träger 34 ist durch zwei Schraubenlöcher 44 am Vorratsbehälter 1 befestigt.

Durch Verwendung dieser Einrichtung wird eine einwandfreie Herstellung und eine gleichmässige Verteilung der Tropfen 12 über den zu markierenden Bereich erreicht, wobei störende Streifen usw. auf der Strassenoberfläche verhindert werden.

In den meisten Fällen wird eine Farbe mit einer bestimmten Zähflüssigkeit verwendet, so dass man in den meisten Fällen von einer praktisch normierten Einstellung ausgehen kann.

Wie bereits erwähnt, wird die Einrichtung normalerweise in einem für normale Einsätze betriebsfertigen Zustand geliefert. Es besteht aber die Möglichkeit, dass ein Anwender ganz spezielle Farbmischungen, Geschwindigkeiten usw. benutzt. Für solche Fälle kann z.B. die Drehzahl der Turbinenwalze 8 und die Form der Schaufeln den Erfordernissen angepasst werden.

Die Turbinenwalze 8 kann z.B. elektrisch oder mechanisch angetrieben werden.

## Patentansprüche

1. Einrichtung an einem Fahrzeug zur Strassenmarkierung mittels Farbtropfen (12), mit einem Vorratsbehälter (1) für die Farbe (13), einer Vorrichtung mit einem Mittel zur Erzeugung eines gegen die untere Kante (5) eines schräg nach unten zur Strasse hin verlaufenden Leitbleches (4) gerichteten Druckluftgürtels zur Beschleunigung der Farbtropfen (12) gegen die Strassenoberfläche (14) zur Umwandlung einer laminaren Strömung der Farbe (13) in eine turbulente Strömung und zur Herstellung und Abgabe der Farbtropfen (12), mit einer Schiebervorrichtung (2) am Vorratsbehälter (1) zum Öffnen, Schliessen und Begrenzen eines Spaltes (3) für den Farbauslass, wobei die untere Kante (5) zur Verbesserung der Tropfenbildung mit Einschnitten (20) versehen ist, und mit Mitteln zum Streuen von Perlen, dadurch gekennzeichnet, dass die Schiebervorrichtung (2) ein einseitig befestigtes und am anderen Ende an eine Feder (25) angeordnets rollbares Dichtungsmittel (23) aufweist, daß zur Bewegung des Dichtungsmittels (23) ein Kolben-/Zylinderaggregat (19) vorgesehen ist, und dass das Dichtungsmittel (23) ein mattenartiges biegsames Material ist, das von einer Rolle (22) an der Kolbenstange (28) des Kolben-/Zylinderaggregates betätigbar ist.

2. Einrichtung nach Anspruch 1, dadurch gekennzeichnet, dass sie eine Turbinenwalze (8) zur Herstellung des Druckluftgürtels aufweist, und dass das Dichtungsmittel eine Silikonmatte (23) ist.

3. Einrichtung nach Anspruch 2, dadurch gekennzeichnet, dass das Kolben-/Zylinderaggregat (19) für eine vertikale Bewegung zum Spalt (3) hin und von diesem weg ausgelegt ist.

4. Einrichtung nach Anspruch 2, dadurch gekennzeichnet, dass ein Spannkörper (31) für das Dichtungsmittel (25) vorgesehen ist, der eine Schwenkbewegung zum Spalt (3) hin und von diesem weg ausführt.

5. Einrichtung nach Anspruch 1, dadurch gekennzeichnet, dass die Turbinenwalze (8) am Umfang und in der Längsrichtung eine Vielzahl von Schaufeln (9) aufweist.

6. Einrichtung nach Anspruch 5, dadurch gekennzeichnet, dass die Turbinenwalze (8) auf der vom Leitblech (4) abgewandten Seite von einem, zwei übereinander gelagerte Bleche (36,37) aufweisenden, auswechselbaren Schirm (35) umgeben ist.

7. Einrichtung nach Anspruch 6, dadurch gekennzeichnet, dass der Schirm (35) in einer Rinne (37) im Unterboden des Vorratsbehälter (1) positioniert und mittels einer Klemme (41) an einem Träger (34) befestigt ist.

8. Einrichtung nach Anspruch 6, dadurch gekennzeichnet, dass die beiden Bleche (36,37) voneinander trennbar sind, wobei das der Turbinenwalze (8) zugekehrte, innere oder zweite Blech (37) am äusseren oder ersten Blech (36) befestigt ist.

9. Einrichtung nach Anspruch 8, dadurch gekennzeichnet, dass das von der Turbinenwalze (8) abgewandte, erste Blech (36) als Träger für das zweite Blech (37) dient, das dünner und leichter ist als das erste (36).

## Claims

1. Device for road marking vehicle using paint drops (12) with a supply container (1) for the paint (13), with a unit provided with a means for producing an air pressure jacket directed against the lower edge (5) of a downward inclined sheet metal guide (4) in order to increase the speed of the drops toward the street surface (14) for conversion of the laminar flow of the paint into a turbulent flow and for producing and disposing the paint drops (12), with a slider means (2) on the supply container for opening, closing and limitation of a paint outlet slot (3), the lower edge (5) being provided with cutouts (20) for improved drop generation, and with means for spreading perls, characterized in that the slider means (2) comprises a rollable sealing, one end of which is fastened, while the other end has a rollable sealing means (23) mounted on a spring (25), that for the movement of the sealing means (23) a piston/cylinder aggre-gate (19) is provided, and that the sealing means (23) is of a mat type, flexible material, operatable from a roll (22) on the piston bar (28) of the aggreate (19).

2. Device according to claim 1, characterized in that it comprises a turbine drum (8) for producing the air flow jacket, and that the sealing means is a silicon mat (23).

3. Device according to claim 2, characterized in that the piston/cylinder aggregate (19) is designed for a vertical movement toward an away from the slot (3).

4. Device according to claim 2, characterized in that a strain body (31) is provided for the sealing means (25), which body is designed for a swiveling movement towards and away from the slot (3).

5. Device according to claim 1, characterited in that the turbine drum (8) on ist circumference and in the longitudinal direction is provided with numerous blades (9).

6. Device according to claim 5, characterized in that the turbine drum (8) on the side opposite to the sheet metal guide (4) is surrounded by an umbrella (35) consisting of two sheet metal parts (36,37) placed above each other.

7. Device according to claim 6, characterized in that the umbrella (35) is located in a groove in the subsoil of the supply container (1), which is positioned by means of a clamp (41) onto a support (34).

8. Device according to claim 6, characterized in that both sheet metals (36,37) can be separated from each other, and that the one adjacent to the inner or second sheet metal (37) is fastened onto the outer or first sheet metal (36).

9. Device according to claim 8, characterized in that the outer or first sheet metal (36), averted from the turbine drum, serves as support for the second sheet metal (37), which is thinner and lighter than the first sheet metal (36).

## Revendications

1. Dispositif pour véhicule de marquage de routes au moyen de gouttes de peinture (12), avec un réservoir (1) contenant la peinture (13), avec une installation comprenant un moyen destiné à produire une zone d'air comprimé entre le bord inférieur (5) d'une tôle de guidage (4) inclinée vers le bas et la route, servant à accélérer les gouttes de peinture (12) en direction de la superficie de la route (14) pour convertir un écoulement laminaire de la peinture (13) en écoulement turbulent ainsi que pour produire et distribuer les gouttes de peinture (12), avec un dispositif à tiroir (2) fixé au réservoir (1) pour ouvrir, fermer, ou limiter l'orifice (3) de passage de la peinture, le bord inférieur (5) étant doté d'encoches (20) destinées à favoriser la formation des gouttes, et avec des moyens servant à répandre des perles, caractérisé en ce que le dispositif à tiroir (2) présente un moyen d'obturation (23) fixé à l'une des extrémités et un système de déplacement attaché à un ressort (25) de l'autre côté, en ce qu'un mécanisme à piston et cylindre (19) est prévu pour mouvoir le moyen d'obturation (23), et en ce que le moyen d'obturation (23) est formé d'un matériau flexible à natte, pouvant être actionné par l'intermédiaire d'un galet (22) fixé au bras (28) du mécanisme à piston et cylindre (19).

2. Dispositif selon la revendication 1, caractérisé en ce qu'il comporte un rouleau-turbine (8) destiné à produire une zone d'air comprimé et que le moyen d'obturation est constitué par une natte en silicone (23).

3. Dispositif selon la revendication 2, caractérisé en ce que le mécanisme à piston et cylindre (19) est conçu pour un déplacement vertical vers l'orifice (3) et dans le sens inverse.

4. Dispositif selon la revendication 2, caractérisé en ce qu'on a prévu un tendeur (31) pour le moyen d'obturation (23) qui exécute un mouvement de pivotement par rapport à l'orifice (3) en direction de celui-ci et dans l'autre sens.

5. Dispositif selon la revendication 1, caractérisé en ce que le rouleau-turbine (8) présente à la superficie et dans le sens longitudinal une multitude d'aubes (9).

6. Dispositif selon la revendication 5, caractérisé en ce que le rouleau-turbine (8) est, du côté opposé à la tôle de guidage (4), entouré d'un écran (35) interchangeable présentant deux tôles (36, 37) superposées l'une sur l'autre.

7. Dispositif selon la revendication 6, caractérisé en ce que l'écran (35) est positionné dans une rigole (38) à la partie inférieure du réservoir (1) et fixé au moyen d'un collier (41) à un support (34).

8. Dispositif selon la revendication 6, caractérisé en ce que les deux tôles (36, 37) sont séparables, la seconde tôle (37) intérieure qui fait face au rouleau-turbine (8) étant fixée à la première tôle (36) extérieure.

9. Dispositif selon la revendication 8, caractérisé en ce que la première tôle (36) éloignée du rouleau-turbine (8) sert de support à la seconde tôle (37) qui est plus mince et plus légère que la première (36).
